Europäisches Patentamt

European Patent Office

Office européen des brevets

(19)

(11) Veröffentlichungsnummer: **0 131 962**
**B1**

(12) **EUROPÄISCHE PATENTSCHRIFT**

(45) Veröffentlichungstag der Patentschrift:
14.10.87

(51) Int. Cl.⁴: **F 28 D  7/10,** F 28 D  21/00,
**F 24 F  3/00**

(21) Anmeldenummer: 84108452.8

(22) Anmeldetag: 18.07.84

(54) **Wärmetauscher.**

(30) Priorität: 19.07.83  DE 3326004

(43) Veröffentlichungstag der Anmeldung:
23.01.85 Patentblatt 85/4

(45) Bekanntmachung des Hinweises auf die Patenterteilung:
14.10.87 Patentblatt 87/42

(84) Benannte Vertragsstaaten:
AT BE CH DE FR GB IT LI LU NL SE

(56) Entgegenhaltungen:
DE-A-1 579 837
DE-A-1 943 979
DE-A-3 116 992
FR-A-1 444 936
FR-A-2 199 099

(73) Patentinhaber: Niedermeier, Georg, Altweg 13,
D-8311 Baierbach (DE)

(72) Erfinder: Niedermeier, Georg, Altweg 13, D-8311
Baierbach (DE)

(74) Vertreter: Kohler, Anton, Dr., Dr.A.Kohler +
M.Schroeder Patentanwälte Schellingstrasse 33,
D-8000 München 40 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Wärmetauscher mit mehreren konzentrisch im Abstand angeordneten Ringkammern für den Durchgang eines ersten Wärmetauschmediums und von den Ringkammern begrenzten ringförmigen bzw. rohrförmigen Durchgängen für ein zweites Wärmetauschmedium.

Es sind bereits kastenförmig ausgebildete Rauchgaswärmetauscher bekannt, bei denen das Rauchgasabzugsrohr von Heizkesseln mit einer von Wasser durchströmten Rohrschlange umgeben ist. Derartige Wärmetauscher sind hinsichtlich des Wärmeübergangs, der Einsetzbarkeit für andere Zwecke und der Anpaßbarkeit an gegebene Raumbedingungen beschränkt.

Ferner ist ein Rauchgasabzugsrohr für Feuerungsanlagen mit einem Wärmetauscher zur Rückgewinnung der in den Rauchgasen enthaltenen Wärmeenergie bekannt, der aus einem oder mehreren baukastenähnlich zusammensetzbaren Hingkammersegmenten, in denen die mittige Ausnehmung für den Durchlaß des Rauchgases von einer Ringkammer für den Durchgang des Wärmetauschmediums umgeben ist, besteht. Ein optimaler Wärmeübergang ist jedoch durch diese Bauweise nicht gegeben.

Auch wurde in der DE-A-3 116 992 bereits ein Zentralheizungskessel mit zyliridrischem Feuerraum und Feuerraummuffel zur Ableitung von gebildetem Kondensat beschrieben, der als Wärmeaustauschflächen ringförmige Kesselglieder mit mindestens zwei konzentrischen Ringelementen aufweist, von denen die inneren Ringelemente eine geringere Höhe besitzen als die äußeren Ringelemente. Bezüglich einer gezielten Strömungsführung des Wärmetauschmediums durch die Ringelemente sind keinerlei Trennelemente vorgesehen, sodaß keine gelenkte Durchströmung der gesamten Ringelemente unter Erzielung eines optimalen Wärmeaustauschs möglich ist. Ferner sind die konzentrischen Ringelemente unterschiedlicher Höhe im bekannten Heizungskessel nur in liegender Bauweise einsetzbar. Die Reinigung des Wärmetauschbereichs ist aufgrund von Verbindungsnocken zwischen den Ringelementen schwierig.

Die Aufgabe der Erfindung besteht in einem Wärmetauscher, der durch spezielle Aufteilung der Wärmeaustauschflächen und gezielte Strömungsführung des Wärmetauschmediums durch die Ringkammern einen besonders günstigen Wärmeübergang liefert und darüberhinaus problemlos gereinigt werden kann.

Diese Aufgabe der Erfiridung wird durch einen Wärmetauscher mit mehreren konzentrisch im Abstand angeordneten Ringkammern für den Durchgang eines ersten Wärmetauschmediums und von den Ringkammern begrenzten ringförmigen bzw. rohrförmigen Durchgängen für ein zweites Wärmetauschmedium gelöst, der dadurch gekennzeichnet ist, daß die miteinander in Verbindung stehenden Ringkammern einen Verteilungsstutzen zum Eintritt des ersten Wärmetauschmediums und einen Sammelstutzen zum Austritt des ersten Wärmetauschmediums aufweisen und durch eine gemeinsame Trennwand zwischen Verteilungsstutzen und Sammelstutzen so unterteilt sind, daß das durch den Verteilungsstutzen eintretende erste Wärmetauschmedium die Ringkammern vollständig durchläuft und dann erst durch den Sammelstutzen abgeleitet wird.

Vorzugsweise ist im Abstand zur Trennwand jeweils eine den oder die ringförmigen Durchgänge abschließende Verteilungswand zur Verteilung des ersten Wärmetauschmediums auf die Ringkammern angeordnet.

Eine oder beide Stirnseiten des Wärmetauschers sind zweckmäßig mit einem ringförmigen, abnehmbaren Deckel versehen, der eine bequeme Reinigung des Innenraums ermöglicht.

Es ist besonders vorteilhaft, den Wärmetauscher in Form von über Nut- und Federeingriff axial aneinanderfügbaren Einzelsegmenten unter Verbindung der entsprechenden Ringkammern und ringförmigen bzw. rohrförmigen Durchgänge auszubilden. Dabei sind die Einzelsegmente zweckmäßig durch außen angebrachte Führungsrohre zur Aufnahme von Befestigungsstangen miteinander verbindbar.

Bei Verwendung eines Wärmetauschmediums mit natürlichem Auftrieb, wie beispielsweise Rauchgas, wird an den Wärmetauscher beidseitig in Strömungsrichtung ein Übergangssegment angeschlossen, das nur eine Ringkammer für den Durchgang des ersten Wärmetauschmediums aufweist. Bevorzugt enthalten die nach außen gerichteten Stirnseiten des Übergangssegments ein Anschlußstück zum Kessel bzw. Kamin und einen mit dem Anschlußstück verbundenen und den Ringraum abschließenden, abnehmbaren Deckel.

Durch die erfindungsgemäße Ausbildung des Wärmetauschers unter Aufteilung des Wärmetauschvorgangs auf mehrere konzentrisch angeordnete Ringkammern und unter gezielter Strömungsführung des Wärmetauschmediums durch die Ringkammern wird ein erhöhter Wärmeübergang gewährleistet, ohne daß der Gesamtquerschnitt des Wärmetauschers erhöht werden muß. Die Gliederbauweise des Wärmetauschers bietet die Möglichkeit, den Wärmetauscher in axialer Richtung beliebig zu vergrößern und den jeweiligen Gegebenheiten genau anzupassen. Durch die Abdeckung der Stirnseite(n) des Wärmetauschers mittels leicht entfernbarem Deckel ist der Innenraum leicht zugänglich, was beispielsweise für die Reinigung sehr vorteilhaft ist.

Der Wärmetauscher ist aus mindestens zwei konzentrisch angeordneten Ringkammern aufgebaut, die für den Durchgang des ersten Wärmetauschmediums bestimmt sind. Die Zahl der Ringkammern ist nicht beschränkt und kann unter Berücksichtigung der Art des Wärmetauschmediums sowie dessen Strömungsdrucks beliebig erhöht werden. Zweckmäßig erwiesen sich Ausbildungen von zwei bis zehn Ringkammern für den Durchgang der verschiedensten Fluide als erstes Wärmetauschmedium. Die Ringkammern sind miteinander verbunden, so daß das Wärmetauschmedium gleichzeitig sämtliche Ringkammern durchströmen kann. Die Ringkammern sind mit einem gemeinsamen Verteilungsstutzen für die Zuführung des ersten Wärmetauschmediums und einem gemeinsamen Sammelstutzen für die Ableitung bzw. Weiterleitung des ersten Wärmetauschmediums verbunden. Damit das erste Wärmetauschmedium die Ringräume vollständig durchströmt und nicht unmittelbar über den Sammelstutzen wieder abgeführt wird, sind die Ringräume durch eine gemeinsame Trennwand unterteilt, wodurch der Strömungsweg des ersten Wärmetauschmediums durch die Ringkammern vorgeschrieben wird.

Die im Abstand voneinander angeordneten Ringkammern lassen in ihren Zwischenräumen ringförmige Durchgänge bzw. in dem von der Innenseite der innersten Ringkammer begrenzten Raum einen rohrförmigen bzw. zylindrischen Durchgang frei, der von dem zweiten Wärmetauschmedium durchströmt wird. Der ringförmige Durchgang oder - bei Ausbildung von mehr als zwei Ringkammern - die ringförmigen Durchgänge sind den Ringkammern gegenüber abgeschlossen und vorzugsweise im Abstand zu der Trennwand durch eine Verteilerwand abgeschlossen, die noch in die äußere Ringkammer hineinreicht, um somit gleichzeitig das erste Wärmetauschmedium von der Eintrittsstelle in sämtliche Ringkammern zu lenken und nach ihrem Durchgang wieder dem Sammelstutzen zuzuleiten.

Nach einer speziellen Ausführungsform der Erfindung kann der Wärmetauscher so ausgebildet werden, daß Einzelsegmente in axialer Richtung zu beliebiger Länge aneinanderfügbar sind. Die Verbindung der Einzelsegmente erfolgt zweckmäßig über Nut- und Federeingriff. Dabei werden die entsprechenden Ringkammern und ringförmigen bzw. rohrförmigen Durchgänge aneinandergefügt.

Während die Aufteilung des Innenraums in mindestens zwei bis beliebig viele Ringkammern mit entsprechend dazwischenliegenden ringförmigen bzw. rohrförmigen Durchgängen aufgrund der vergrößerten Oberfläche einen optimalen Wärmeübergang vom ersten Wärmetauschmedium zum zweiten Wärmetauschmedium liefert, ermöglicht die Segmentbauweise eine maßgeschneiderte Anpassung an die jeweiligen Gegebenheiten. Somit kann beispielsweise bei Vergrößerung einer Anlage oder einer Erhöhung der Heizleistung der Wärmetauscher variabel verlängert werden.

Die Befestigung der einzelnen in axialer Richtung, beispielsweise über Nut- und Federeingriff, aneinandergefügten Einzelsegmente des Wärmetauschers erfolgt durch geeignete Befestigungsorgane, beispielsweise mittels Führungsrohren, durch die Befestigungsstangen hindurchgeführt werden.

Der Wärmetauscher der Erfindung ist für sämtliche Fluid-Wärmetauschmedien in den verschiedensten Kombinationen geeignet. Beispielsweise kann der erfindungsgemäße Wärmetauscher für den Wärmeaustausch zwischen den nachfolgend aufgeführten Medien in wirtschaftlicher Weise eingesetzt werden: Wasser - Wasser, Wasser - Luft, Wasser - Dampf, Sole - Fluorchlorkohlenwasserstoffe, Rauchgas - Luft, Rauchgas - Wasser. Der Wärmetauscher kann sowohl zu Heiz- als auch zu Kühlzwecken eingesetzt werden.

Der Wärmetauscher der Erfindung kann für Verfahren zur Wärmerückgewinnung aus Abluft bzw. Abwässern in Industriebetrieben sowie bei Wärmerückgewinnungsanlagen z. B. in der Spanplatten- und Textilherstellung, in Autolackiererreien, Gießereien, Galvanik- und Schweißtechniken usw. eingesetzt werden und aufgrund der Gliederbauweise den spezifischen Kundenwünschen angepaßt werden. Außerdem ist der Wärmetauscher durch das Ringkammernsystem ohne erheblichen Aufwand zu warten und zu reinigen. Der Wärmetauscher ist insbesondere in Verbindung mit Heizkesseln verwendbar, die feste, flüssige oder gasförmige Brennstoffe verfeuern, und wird als Rauchgaswärmetauscher zwischen dem Heizkesselaustritt und dem Kamineintritt eingesetzt. Derartige Rauchgaswärmetauscher sind außerdem auch hervorragend zum Einbau in offene Kamine und Kachelöfen geeignet.

Für die Verwendung des Wärmetauschers der Erfindung in Verbindung mit Wärmetauschmedien mit natürlichem Auftrieb. z. B. Rauchgas, wird je ein Übergangssegment zum Abgasrohrstutzen des Heizkessels und zum Kamin vorgesehen, das nur eine Ringkammer für das erste Wärmetauschmedium, z. B. Wasser, aufweist, während das Rauchgas durch den von der Ringkammer umschlossenen zylindrischen Raum strömt. Durch den Anschluß des Übergangssegments wird der Auftrieb oder Zug des Rauchgases nicht gehemmt und kann kontinuierlich unter Wärmeaustausch den Wärmetauscher durchströmen.

Der Wärmetauscher der Erfindung kann aus den üblichen Materialien, beispielsweise Metallen, wie Gußeisen, Stahl, insbesondere $V_2A$-Stahl, Kupfer oder Aluminium sowie deren Legierungen gefertigt sein.

Nachfolgend wird die Erfindung anhand bevorzugter Ausführungsformen durch die Zeichnungen erläutert, worin

Fig. 1 einen Querschnitt durch eine Ausführungsform eines erfindungsgemäßen Wärmetauschers,

Fig. 2 eine Ansicht, teilweise im Schnitt, eines erfindungsgemäßen Wärmetauschers in Gliederbauweise,

Fig. 3 und 4 Ansichten, teilweise im Schnitt, eines Übergangssegments und

Fig. 5 ein Schema einer Heizungsanlage unter Einbau des erfindungsgemäßen Wärmetauschers in Gliederbauweise wiedergeben.

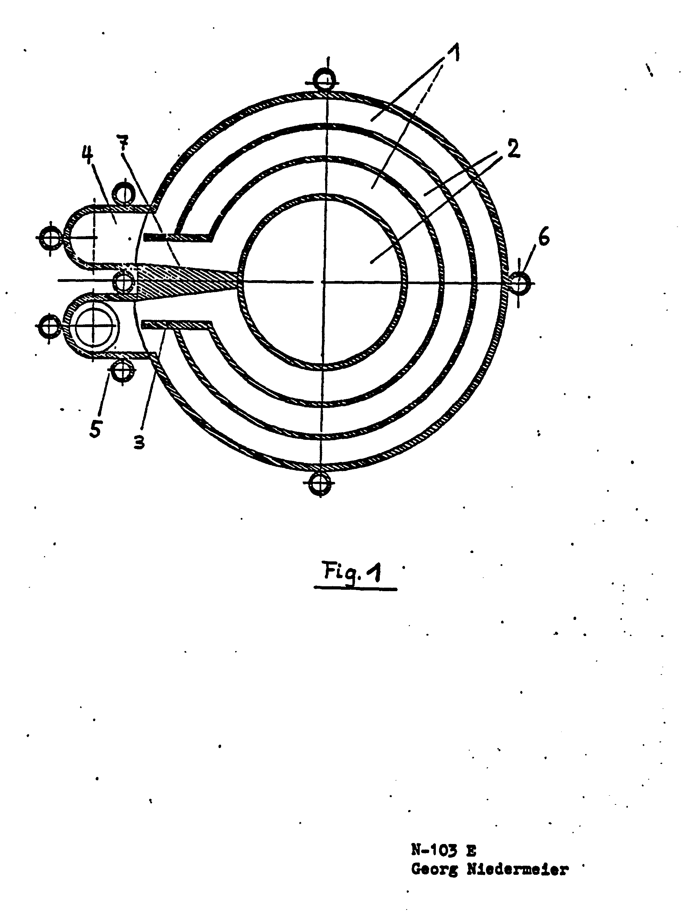

Fig. 1 zeigt im Querschnitt den Aufbau eines erfindungsgemäßen Wärmetauschers mit zwei konzentrisch angeordneten Ringkammern 1 für den Durchgang eines ersten Wärmetauschmediums und einem dazwischenliegenden ringförmigen bzw. rohrförmigen oder zylindrischen Durchgang 2 für das zweite Wärmetauschmedium. Die Ringkammern 1 sind mit einem Verteilungsstutzen 4 und einem Sammelstutzen 5 für die Zuführung bzw. Abführung des ersten Wärmetauschmediums verbunden. Die beiden Ringkammern 1 sind durch eine Trennwand 7 unterteilt, so daß das durch den Verteilungsstutzen 4 eintretende erste Wärmetauschmedium die gesamten Ringkammern durchläuft und dann erst durch den Sammelstutzen 5 abströmt. Der zwischen den beiden Ringkammern 1 liegende ringförmige Durchgang 2 für das zweite Wärmetauschmedium ist gegenüber den Ringkammern im Abstand von der Trennwand 7 durch eine in die äußere Ringkammer hineinreichende Verteilungswand 3 abgeschlossen. Diese Verteilungswand hat neben dem Abschluß des ringförmigen Durchgangs noch die Funktion, das eintretende erste Wärmetauschmedium auf die beiden Ringkammern zu verteilen und nach Durchgang durch die Ringkammern auf den Sammelstutzen 5 hinzulenken. Über den äußeren Umfang des Wärmetauschers verteilt sind als Befestigungsorgane Führungsrohre 6 zur Aufnahme von Befestigungsstangen angebracht.

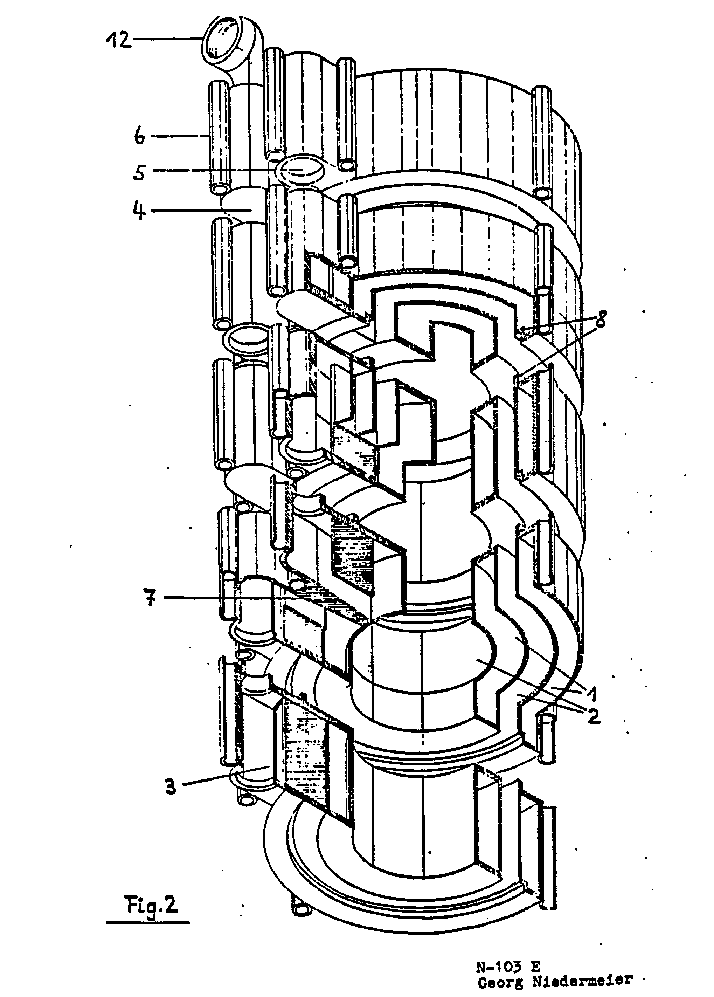

Fig. 2 gibt den Wärmetauscher der Erfindung in Gliederbauweise wieder. D.h. Einzelsegmente des mehrere Ringkammern aufweisenden Wärmetauschers sind in axialer Richtung so aneinandergefügt, daß die Ringkammern 1 und die ringförmigen bzw. rohrförmigen Durchgänge 2 einander entsprechen. Die hier gezeigten beiden Ringkammern 1, die selbstverständlich auf eine beliebige Anzahl erweitert werden können, sind jeweils als geschlossene Ringkammern ausgebildet, die eine Trennwand 7 aufweisen und im Abstand von der Trennwand 7 auf der einen Seite mit dem Verteilungsstutzen 4 für das zuzuführende erste Wärmetauschmedium und auf der anderen Seite mit dem Sammelstutzen 5 zur Ableitung bzw. Weiterleitung des ersten Wärmetauschmediums in Verbindung stehen. Der zwischen den beiden Ringkammern 1 ausgebildete Ringraum 2 wird im Abstand von der Trennwand 7 durch eine Verteilungswand 3 abgeschlossen, so daß der Eintritt des ersten Wärmetauschmediums in den Ringraum 2 ausgeschlossen ist, andererseits das eintretende erste Wärmetauschmedium auf die beiden Ringräume verteilt wird. Die Einzelsegmente des Wärmetauschers werden über an den Ringkammern ausgebildeten Nut- und Federeingriff 8 fluiddicht aneinandergefügt. An der Außenfläche des Wärmetauschers befinden sich Befestigungsrohre 6, die zur Aufnahme von Befestigungsstangen dienen, um die Einzelsegmente fest miteinander zu verbinden. Die Führungsrohre 6 der Einzelsegmente sind aufeinandergefluchtet angeordnet, so daß der Einschub von Befestigungsstangen ermöglicht wird. Der Verteilungsstutzen 4 steht mit einem Anschlußbogen 12 in Verbindung, über den das erste Wärmetauschmedium, z. B. Wasser oder Luft, eingeführt wird. Das durch den Verteilungsstutzen 4 eingeführte erste Wärmetauschmedium durchströmt die Ringkammern 1, tritt über den Sammelstutzen 5 aus und wandert zum Verteilerstutzen 4 des nächsten Wärmetauschersegments, um dort die nächsten beiden Ringkammern 1 zu durchwandern. Dieser Strömungsweg setzt sich durch den gesamten zusammengesetzten Wärmetauscher fort. Das zweite Wärmetauschmedium, beispielsweise Rauchgas, durchströmt die von den Ringkammern freigelassenen Zwischenräume, nämlich den ringförmigen Durchgang 2 zwischen den beiden Ringkammern sowie den durch die innere Ringkammer gebildeten rohrförmigen bzw. zylindrischen inneren Durchgang 2. Durch die auf engem Raum durch Ausbildung mehrerer Ringkammern geschaffene große Oberfläche findet ein äußerst günstiger Wärmetausch zwischen den beiden Medien statt. Die Zahl der aneinanderfügbaren Glieder ist nicht beschränkt und kann den jeweiligen Gegebenheiten genau angepaßt werden.

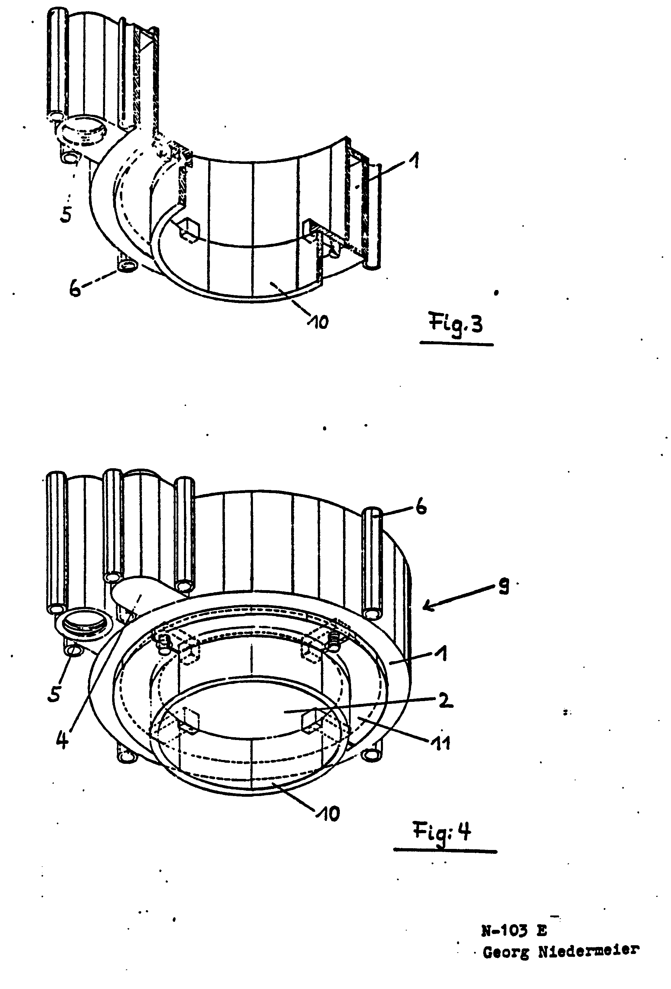

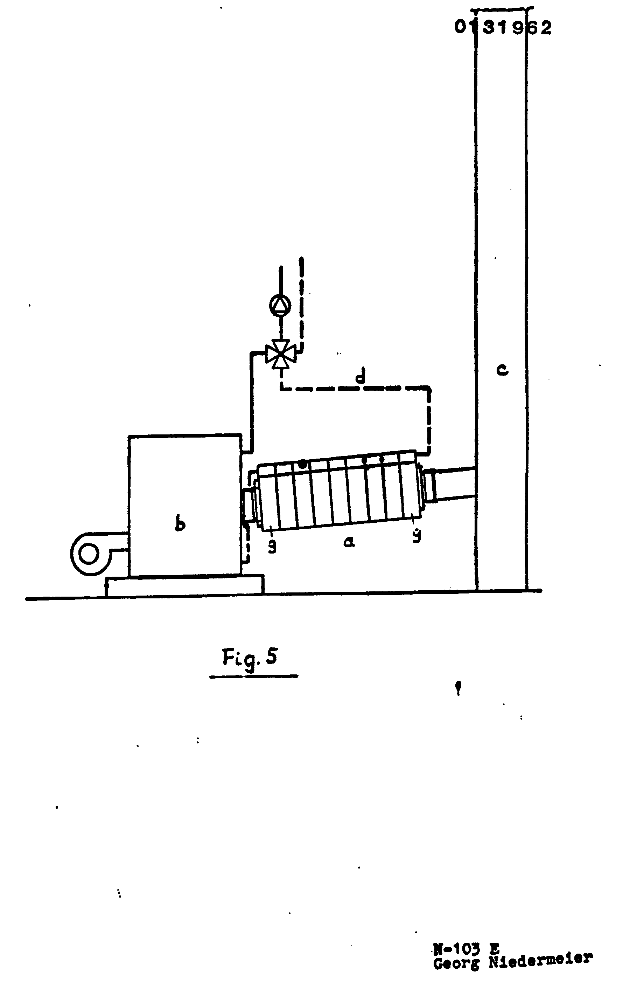

Die Fig. 3 und 4 zeigen ein Übergangssegment 9, das an den Wärmetauscher angeschlossen werden kann. Wesentlich ist dieses Anschlußstück bei Verwendung eines Wärmetauschmediums mit natürlichem Auftrieb oder Naturzug, wie beispielsweise Rauchgas. Aufgrund des Übergangssegments findet, da kein zusätzlicher Druck angewendet wird, eine bessere Durchströmung des Wärmetauschers statt. Das Übergangssegment weist im Gegensatz zum übrigen Teil des Wärmetauschers nur eine Ringkammer 1 für den Durchgang des ersten Wärmetauschmediums auf, während das zweite Wärmetauschmedium ausschließlich durch den rohrförmigen Durchgang 2 strömt. Die nach außen gerichtete Stirnseite des Übergangssegments weist konzentrisch im Innern ein rohrförmiges Anschlußstück 10 auf, das zum Anschluß beispielsweise an den Heizkessel zur Zuführung von Rauchgas oder zum Anschluß an den Kamin bestimmt ist. Das Anschlußstück wird von einem ringförmigen, leicht abnehmbaren Deckel 11 umgeben, der beispielsweise verschraubt sein kann und nach Abnahme den Innenraum freigibt und damit eine leichte Reinigung ermöglicht. Die Verbindung des Übergangssegments mit dem übrigen Wärmetauscher kann wiederum über Nut- und Federeingriff 8 sowie zur Befestigung über Führungsrohre 6, welche Befestigungsstangen aufnehmen können, erfolgen.

In Fig. 5 ist eine schematische Darstellung wiedergegeben, die den Einbau eines in Gliederbauweise ausgeführten erfindungsgemäßen Wärmetauschers a in eine Heizungsanlage zwischen Heizkessel b und Kamin c zeigt. Die Ringkammern des Wärmetauschers werden von dem über den Kreislauf d eingeführten ersten Wärmetauschmedium, z. B. Wasser, durchströmt, während die zwischen den Ringkammern liegenden ringförmigen bzw. rohrförmigen Durchgänge von dem aus dem Heizkessel austretenden Rauchgas im Gegenstrom unter Wärmeaustausch durchströmt werden. Die einerseits dem Heizkessel und andererseits dem Kamin zugekehrten beiden äußeren Segmente des Wärmetauschers sind als Übergangssegmente 9 ausgebildet und weisen nur eine Ringkammer auf. Da die gezeigte Heizanlage mit Naturzug arbeitet, wird durch den Einsatz der Übergangssegmente ein staufreier Durchgang des Rauchgases garantiert.

Die Wärmetauschmedien können sowohl im Gleich-Kreuzstrom als auch im Gegen-Kreuzstrom geführt werden.

## Patentansprüche

1. Wärmetauscher mit mehreren konzentrisch im Abstand angeordneten Ringkammern (1) für den Durchgang eines ersten Wärmetauschmediums und von den Ringkammern begrenzten ringförmigen bzw. rohrförmigen Durchgängen (2) für ein zweites Wärmetauschmedium, dadurch gekennzeichnet, daß die miteinander in Verbindung stehenden Ringkammern (1) einen Verteilungsstutzen (4) zum Eintritt des ersten Wärmetauschmediums und einen Sammelstutzen (5) zum Austritt des ersten Wärmetauschmediums aufweisen und durch eine gemeinsame Trennwand (7) zwischen Verteilungsstutzen (4) und Sammelstutzen (5) so unterteilt sind, daß das durch den Verteilungsstutzen (4) eintretende erste Wärmetauschmedium die Ringkammern vollständig durchläuft und dann erst durch den Sammelstutzen (5) abgeleitet wird.

2. Wärmetauscher nach Anspruch 1, dadurch gekennzeichnet, daß im Abstand zur Trennwand (7) jeweils eine den ringförmigen Durchgang oder die ringförmigen Durchgänge (2) abschließende Verteilungswand (3) zur Verteilung des ersten Wärmetauschmediums auf die Ringkammern (1) angeordnet ist.

3. Wärmetauscher nach Anspruch 1 oder 2, dadurch gekennzeichnet, daß er in Form von über Nut- und Federeingriff (8) axial aneinanderfügbaren Einzelsegmenten unter Verbindung der entsprechenden Ringkammern (1) und ringförmigen bzw. rohrförmigen Durchgänge (2) ausgebildet ist.

4. Wärmetauscher nach Anspruch 3, dadurch gekennzeichnet, daß die Einzelsegmente durch außen angebrachte Führungsrohre (6) zur Aufnahme von Befestigungsstangen miteinander verbindbar sind.

5. Wärmetauscher nach Anspruch 1 bis 4, dadurch gekennzeichnet, daß bei Verwendung eines Wärmetauschmediums mit natürlichem Auftrieb im Strömungsweg beidseitig ein Übergangssegment (9) angeschlossen ist, das nur eine Ringkammer (1) für den Durchgang des ersten Wärmetauschmediums aufweist.

6. Wärmetauscher nach Anspruch 5, dadurch gekennzeichnet, daß die nach außen gerichteten Stirnseiten des Übergangssegments ein Anschlußstück (10) zum Kessel bzw. Kamin und einen an das Anschlußstück angrenzenden und den Innenraum abschließenden, abnehmbaren Deckel (11) aufweisen.

## Claims

1. Heat exchanger having several concentrically spaced ring chambers (1) for the passage of a first heat exchange medium and annular or tubular passages (2) respectively defined by the ring chambers for a second heat exchange medium, characterized in that the ring chambers (1) being connected with each other have a distributing pipe (4) for the entry of the first heat exchange medium and a collecting pipe (5) for the exit of the first heat exchange medium and being divided by a common dividing wall (7) between distributing pipe (4) and collecting pipe (5) so that the first heat exchange medium entering through the distributing pipe (4) passes completely through the ring chambers and only than being discharged through the collecting pipe (5).

2. Heat exchanger according to claim 1, characterized in that on each side from the dividing wall (7) and at a distance to it a distributing wall (3) defining the annular passage or annular passages (2) is arranged to distribute the first heat exchange medium to the ring chambers (1).

3. Heat exchanger according to claims 1 or 2, characterized in that it is formed in form of individual segments axially joinable via slot and key engagement (8) joining the corresponding ring chambers (1) and annular or tubular passages (2) respectively.

4. Heat exchanger according to claim 3, characterized in that the individual segments are joinable by guide tubes (6) provided outside to receive fixing rods.

5. Heat exchanger according to claims 1 to 4, characterized in that when using a heat exchange medium having natural lift a transition segment (9) is attached in the flow path on both sides, having one ring chamber (1) only for the passage of the first heat exchange medium.

6. Heat exchanger according to claim 5, characterized in that the outwardly directed front sides of the transition segment have a connecting piece (10) to the boiler or chimney respectively and adjacent to the connecting piece a detachable cover (11) closing the interior.

branchement (10) pour la chaudière ou la cheminée, un couvercle (11) amovible adjacent à cette pièce de branchement et qui ferme le volume intérieur.

## Revendications

1. Echangeur de chaleur comportant plusieurs chambres annulaires (1) concentriques, à une certaine distance l'une de l'autre, pour le passage d'un premier fluide d'échange de chaleur et de passages (2) annulaires ou tubulaires délimités par les chambres annulaires pour un second fluide d'échange de chaleur, caractérisé en ce que les chambres annulaires (1) reliées entre elles comportent un ajutage de répartition (4) pour faire entrer le premier fluide d'échange de chaleur et un ajutage collecteur (5) pour la sortie du premier fluide d'échange de chaleur, en étant séparées par une cloison (7) commune entre l'ajutage de répartition (4) et l'ajutage collecteur (5) de façon que le premier fluide d'échange de chaleur qui entre par l'ajutage de répartition (4) traverse complètement les chambres annulaires pour ne sortir qu'à ce moment par l'ajutage collecteur (5).

2. Echangeur de chaleur selon la revendication 1, caractérisé en ce qu'à une certaine distance de la cloison (7), il comporte chaque fois une cloison de répartition (3) qui ferme le passage annulaire ou les passages annulaires (2) pour répartir le premier fluide d'échange de chaleur entre les chambres annulaires (1).

3. Echangeur de chaleur selon la revendication 1 ou 2, caractérisé en ce qu'il se compose d'éléments distincts susceptibles d'être réunis axialement par des liaisons à rainure et clavette (8) en reliant les chambres annulaires (1) et les passages annulaires ou tubulaires (2) correspondants.

4. Echangeur de chaleur selon la revendication 3, caractérisé en ce que les éléments distincts sont susceptibles d'être reliés par des tubes de guidage (6) extérieurs recevant des barres de fixation.

5. Echangeur de chaleur selon les revendications 1 à 4, caractérisé en ce que dans le cas d'un fluide d'échange de chaleur à poussée naturelle, on a de part et d'autre dans le chemin d'écoulement un élément de transition (9) qui ne comporte qu'une seule chambre annulaire (1) pour le passage du premier fluide d'échange de chaleur.

6. Echangeur de chaleur selon la revendication 5, caractérisé en ce que les faces frontales tournées vers l'extérieur du segment de transition comportent au niveau de la pièce de

Fig. 1

N-103 E
Georg Niedermeier

Fig.2

N-103 E
Georg Niedermeier

Fig. 3

Fig. 4

N-103 E
Georg Niedermeier

0 131 962

Fig. 5

N-103 E
Georg Niedermeier